# EUROPÄISCHE PATENTSCHRIFT

(11) **EP 2 131 305 B1**
(45) Veröffentlichungstag und Bekanntmachung des Hinweises auf die Patenterteilung: **31.12.2014**
(21) Anmeldenummer: 09007076.4
(22) Anmeldetag: 27.05.2009
(51) Int. Cl.: G06K 7/00

(54) **Kartenleser für Chipkarten, insbesondere für Micro-SC-Karten und Transflash Karten nach dem Push-Push-Prinzip**
Card reader for chip cards, in particular for micro SC cards and transflash cards according to the push-push principle
Lecteur de carte pour cartes à puce, notamment pour microcartes SC et cartes transflash selon le principe de double poussée

(30) Priorität: 03.06.2008 DE 102008026593
(43) Veröffentlichungstag der Anmeldung: 09.12.2009
(73) Patentinhaber: Amphenol-Tuchel Electronics GmbH, 74080 Heilbronn (DE)
(72) Erfinder: Dörr, Martin Thomas, 74211 Leingarten (DE); Schnell, Thomas, 74078 Heilbronn (DE); Goebel, Marco, 74613 Öhringen (DE)
(74) Vertreter: Wagner, Karl H.

(56) Entgegenhaltungen:
- EP-A- 1 729 375
- JP-A- 2007 134 265
- US-A1- 2002 192 991
- US-A1- 2006 046 572

## Beschreibung

Die vorliegende Erfindung bezieht sich auf einen Kartenleser nach dem Push-Push-Prinzip, bei dem mit einem ersten Push auf eine Karte ein Schieber in eine Ruheposition gebracht wird, die der Leseposition der Karte entspricht und mit einem zweiten Push die genannte Karte wieder in eine Entnahmeposition gelangt. Die Kartentypen auf die sich vorliegender Kartenleser bezieht sind Micro-SD-Karten und Karten vom Typ Transflash.

Üblicherweise weisen Push-Push-Leser eine Steuerkurve auf, die es ermöglicht, die Karten nach einem ersten Push in der Leseposition zu halten, um diese nach einem weiteren Push wieder zu verlassen und schließlich in einer Nichtleseposition, in der die Karte dem Leser entnommen werden kann, endet. Push-Push-Leser, welche speziell für kleine Kartentypen, wie beispielsweise die vorher genannten Micro-SD-Karten oder Transflash-Karten, deren Kartengröße kleiner als von SIM-Karten oder kleinen Speicherkarten entspricht, unterliegen einer ständigen Miniaturisierung. Neben bekannten SIM-Kartenlesern mit Klapp-/Schiebedeckeln tritt nun das Problem der Miniaturisierung auch bei Kartenlesern nach dem Push-Push-Prinzip auf.

Zum Stand der Technik sei speziell auf die US 2002/0192991 A1 hingewiesen, die einen Push-Push-Kartenleser mit einem Kontaktträger und einem durch die einzusteckende und zu lesende Karte betätigbaren Push-Push-Mechanismus aufweist. Der Push-Push-Mechanismus besitzt einen am Kontaktträger hin- und her beweglich angeordneten Kartenschieber. Im Kartenschieber ist ein Steuerkurvenkanal ausgebildet und mit diesem steht ein Steuerelement mit seinem einen Ende in Eingriff, während das andere Ende des Steuerelements am Kontaktträger angebracht ist.

Die vorliegende Erfindung sieht einen Push-Push-Kartenleser gemäß Anspruch 1 vor. Bevorzugte Ausgestaltungen der Erfindung ergeben sich aus den Unteransprüchen.

Ein Problem bisheriger Push-Push-Kartenleser besteht darin, dass ihre Bauhöhe, welche durch die Bauart der genannten Steuerkurven bedingt ist, groß ist. Wesentlich für die Bauhöhe der Steuerkurven ist die Anzahl der notwendigen Stufen, die ein störungsfreies Einführen oder Entnehmen der Karte garantieren sollen. Die Bauhöhe soll in der Größenordnung von 1 mm liegen. Das Problem der Reduktion der Anzahl der Stufen wird erfindungsgemäß gelöst, dass durch Federmittel ein Steuerelement, welches in einen Steuerkurvenkanal eingreift und auf einem Kartenschieber montiert ist und innerhalb des Steuerkurvenkanals bewegt wird, eine Ablenkung erfährt, die seitlich zur Kartenschieber-Bewegungsrichtung erfolgt, wobei diese Federmittel dadurch gekennzeichnet sind, dass eine auf das Steuerelement seitlich einwirkende Kraft von diesen aufgebracht wird

Insbesondere Kartenleser kleiner Bauart zeigen die Problematik, dass beim Auswurf der Karte, also nach dem zweiten Push auf die Karte, die Karte unter Umständen unkontrolliert aus dem Push-Push-Kartenleser herausbefördert wird. Gemäß der vorliegenden Erfindung ist vorgesehen, dass der auf dem Kontaktträger beweglich aufgebrachte Kartenschieber, der mit einem U-förmigen Federabschnitt ausgestattet ist, welcher ein Abbremsen des Kartenschiebers an einem Stoppelement bewirkt, wenn die Karte über einen zweiten Push aus der Ruheposition in die Entnahme oder Ausgangsposition gebracht wird und der weiterhin ein Auswerfen und Blockieren der Karte bewirkt, wobei das Blockieren der Karte durch den Federabschnitt am Schieber ein Herausfallen der Karte aus dem Kartenleser verhindert, wenn sich diese in der Entnahme- oder Nichtleseposition befindet.

Außerdem sind bei bisherigen Push-Push-Kartenlesern keine Vorkehrungen getroffen, die ein irrtümliches Einsetzen der Karte in den Kartenleser verhindern, was wiederum Beschädigungen, sowohl an der Karte als auch an dem Kartenleser, zur Folge haben kann. Eine Kartenschieber-Anlagefläche lässt ein Einbringen der Karte in die Leseposition nur in einer korrekten Lage der Karte bezüglich des Lesers zu.

Die mit der Erfindung erzielten Vorteile sind im wesentlichen das Erreichen einer geringen Gesamthöhe des Push-Push-Kartenlesers durch das Einsparen mindestens einer weiteren Stufe innerhalb des Steuerkurvenkanals, ohne die in konventionellen Steuerkurven ein funktionsgerechtes Führen des Steuerelementes innerhalb des Steuerkurvenkanals nicht zu erzielen ist.

Dies wird erreicht, indem eine Stützfeder, die aus dem Gehäusedeckel ausgestanzt wird, eine seitliche Kraft auf den Steuerdraht ausübt und somit ein Zurückkehren des Steuerelementes in den ersten Abschnitt des Steuerkurvenkanals, was üblicherweise durch eine Stufe realisiert ist, verhindert wird und stattdessen in eine Ruheposition, die der Leseposition der Karte entspricht, gezwungen wird. Durch das Ausstanzen der Stützfeder aus dem Gehäusedeckel ergibt sich ein weiterer Vorteil dieser Art der Ausführung, indem zusätzliche Bauteile eingespart werden können und die Funktionstüchtigkeit. des Push-Push-Mechanismus auch nach intensiver Nutzung sichergestellt werden kann, da eine Stufe weniger einem Alterungsprozess unterliegt.
Der Arbeitsschritt des Ausstanzens von Federlappen im Gehäusedeckel ist im Herstellungsprozess unabhängig von der Notwendigkeit der Stützfeder vorhanden um eine vorteilhafte Führung insbesondere Gleitführung der Karte innerhalb des Kartenlesers zu gewähren und stellt somit keinen zusätzlichen Herstellungsaufwand dar. Damit wird aber ebenfalls das Ziel der Einsparung von Bauteilen durch keinen zusätzlichen Herstellungsschritt erreicht. Die Federlappen können vorzugsweise die Karte auch im gewissen Umfang halten und auch Niederhalten

Ein weiterer Vorteil ergibt sich durch die Ausführung des Kartenschiebers mit dem U-förmigen Federabschnitt an dessen erstem Ende, welches mehrere Funktionen erfüllt. Zum einen bewirkt eine Bremsnase dieses federnden Abschnitts am Kartenschieber ein Abbremsen nach dem zweiten Push auf die Karte an einem Stoppelement am Kontraktträger, wenn die Karte in die Ausgangsstellung bewegt wird, und zum anderen wird die Karte durch eine zweite Nase, die Einrastnase, die sich in einer seitlichen Öffnung, vorzugsweise der Kartenaussparung, an der Karte einklinkt, am Herausfallen gehindert. Dies erlaubt unter anderem eine Nutzung des Push-Push-Kartenlesers in einer Überkopf-Position, bei der die Karteneinschub-Öffnung des Lesers nach unten zeigt.

Weitere Einzelheiten der Erfindung ergeben sich aus der Beschreibung von Ausführungsbeispielen anhand der Zeichnungen; in den Zeichnungen zeigt:
- Fig.1: ein Push - Push Kartenleser mit Federlappen und den Federmitteln, die in der Form eines Federelementes vorzugsweise einer Stützfeder ausgebildet sind, welche aus dem Metalldeckel ausgestanzt sind, wobei sich der Kontaktträger unterhalb des Metalldeckels befindet und in der Zeichnung, am vorderen rechten Ende und durch die Aussparungen im Metalldeckel zu erkennen ist;
- Fig.2: den Kontaktträger mit den entsprechenden Kontakten, einem Kartenanwesenheitsschalter am oberen Ende und einen Teil des Push-Push Mechanismus, gebildet aus Spiralfeder, Steuerkurvenkanal, Kartenschieber und Steuerelement;
- Fig. 3: einen perspektivisch vergrößerten Ausschnitt von Fig. 2, in dem man die Stufen innerhalb des Steuerkurvenkanals erkennen kann;
- Fig. 4: den Kartenleser mit zum Teil eingeführter Karte, jedoch ohne den Metalldeckel;
- Fig. 5: die Karte in der so genannten Überhubposition, voll eingeschoben, wobei das Steuerelement sich noch im Steuerkurvenkanalabschnitt (SKA) oberhalb der Ruheposition befindet, allerdings durch die Stützfeder im Metalldeckel (hier nicht dargestellt) schon in Richtung der Ruheposition seitlich versetzt, dabei liegt die Karte an der Kartenschieber-Anlagefläche an und die Nase des U-förmigen Federelementes am Kartenschieber ist in der Kartenaussparung eingerastet;
- Fig.6: ein Detail von Fig. 5, worin die Steuerkurve, die Spiralfeder, ein Teil des Kartenanwesenheitsschalters und das Steuerelement in der Überhubposition zu erkennen sind;
- Fig. 7: ein weiteres Detail von Fig. 5, bei dem in der Überhubposition das Federelement auf das Steuerelement wirkend dargestellt ist;

- Fig. 8: ein Detail von Fig. 5, wobei der Kartenschieber in der Überhubposition mit in der Karte eingerasteter Nase des Kartenschiebers gezeigt ist;
- Fig. 9: den Push-Push Kartenleser mit eingeschobener Karte in der Leseposition, wobei das Steuerelement sich in der Rastposition der Steuerkurve befindet;

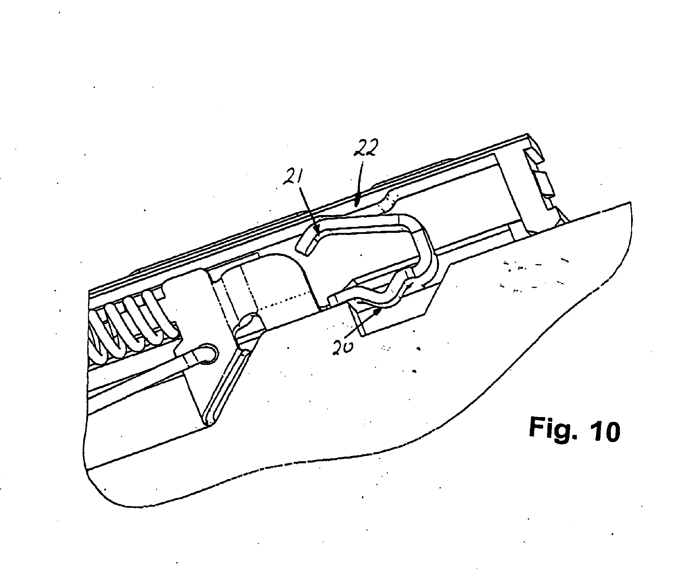

- Fig. 10: ein Detail des Kartenschiebers beim Auswurf der Karte, wobei das U-förmige Federelement mit seiner Nase am Stoppelement des Kartenhalters abgebremst wird;
- Fig. 11: im oberen linken Teil des Kartenschiebers die Karten-Anlagefläche, wobei sich daneben die Aufnahme für das Steuerelement befindet und rechts daneben die Aufnahme für die Spiralfeder, und wobei im unteren Teil des Kartenschiebers sich das U-förmige Federelement mit den beiden Nasen links und rechts befindet;
- Fig. 12: ein Detail des Steuerkurvenkanals mit den verschiedenen Steuerkurvenkanalabschnitten (SKA), wobei sich im oberen mittleren Teil die Rastposition befindet, flankiert von den beiden Steuerkurvenkanalabschnitts-Stufen, wobei ebenfalls die Schnittverläufe der Fig. 13 und 14 dargestellt sind;
- Fig. 13: eine Schnittdarstellung aus Fig. 12 entlang A-A. Im oberen Teil ist die Rastposition, sowie die Stufe (Plateau) im ersten Teil des Steuerkurvenkanals, im unteren Bildbereich die im zweiten Teil des Steuerkurvenkanals befindliche Stufe, als auch der Anfang, bzw. das Ende des Steuerkurvenkanals zu erkennen, ist;
- Fig. 14: eine Schnittdarstellung aus Fig. 12 entlang B-B, wobei in der Mitte die Rastposition, flankiert von der Stufe (Rampe) links von der Rastposition und der Stufe (Plateau) rechts von der Rastposition gezeigt ist und die beiden Höhenunterschiede bezüglich der Kontaktträgerunterseite Deutlich zu erkennen sind.

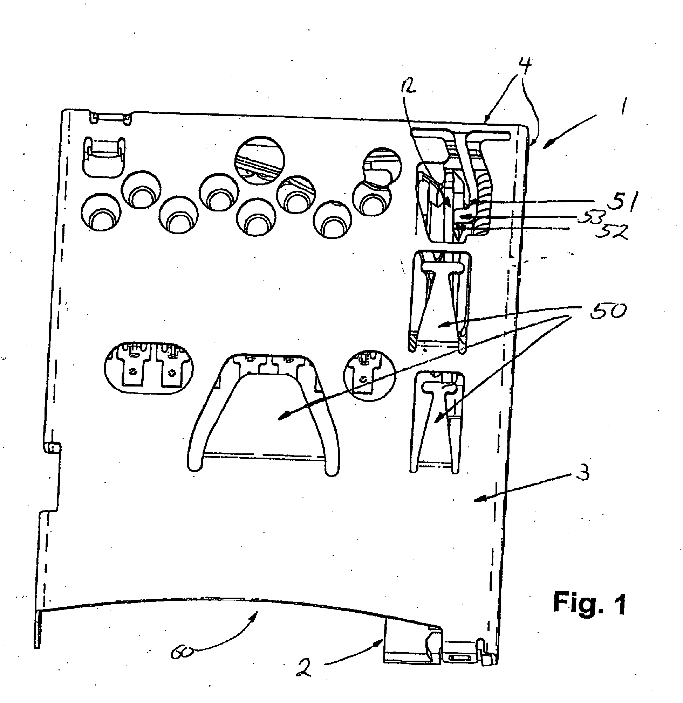

In Figur 1 ist ein Push-Push Kartenleser 1 gezeigt, der vorzugsweise ein Chipkarten, Mikro-SD oder Transflash-Kartenleser ist. Ganz generell dient der Push-Push Kartenleser 1 dazu, eine elektrische Verbindung zwischen der Karte und einem anderen elektrischen Gerät, z. B einer Kamera herzustellen, um Daten die auf einer Karte gespeichert sind zu lesen oder Daten darauf abzulegen. Der erfindungsgemäße Push-Push Kartenleser 1 weist einen Kontaktträger 2, einen Push-Push Mechanismus 10 und einen Deckel 3 auf. Der Push-Push Mechanismus 10, weist einen Kartenschieber 11, ein Steuerelement 12, eine Feder 13, einen Steuerkurvenkanal 30 und eine vorzugsweise vom Deckel 3 gebildete Stützfeder 51 zum seitlichen Ablenken des Steuerelementes 12, auf. Der Kontaktträger 2 besitzt (in Fig. 1) am oberen Ende, d.h. gegenüber einer am unteren Ende vorgesehenen Karteneinführöffnung 60, und an der rechten Seite, Rahmenstege 4, die miteinander verbunden sind um eine Steigerung der Steifigkeit des Kontaktträgers 2 zu erreichen. Der Deckel 3 weist Andruckmittel 50 auf. Im Falle des gezeigten Metalldeckels 3, sind die Andruckmittel 50 in der Form von mehreren ausgestanzten Federlappen 50 ausgebildet, die dem Anpressen der Karte 5 -Federlappen 50 in der Mitte-, sowie dem Anpressen des Steuerelementes 12
-zwei übereinander liegende Federlappen 50 auf der rechten Seite des Kartenlesers 1-
dienen. Ebenfalls dargestellt sind, die Stützfeder 51, ein Führungselement 52 und eine Federelement-Anlagefläche 53, die zur Führung des Steuerelementes 12 vorgesehen sind.

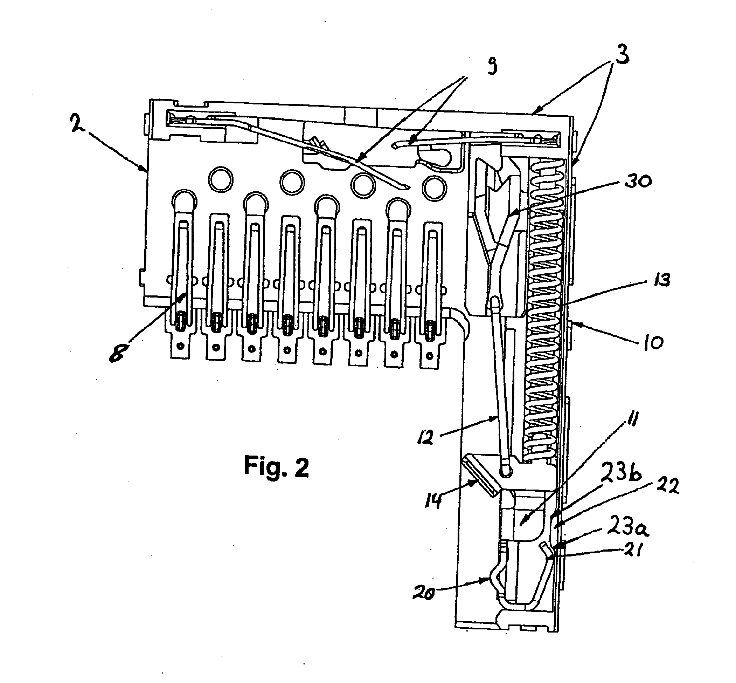

In Figur 2 ist der Kontaktträger 2 gezeigt, mit zentral angeordneten Kontakten 8, die einen elektrischen Kontakt zwischen einer hier nicht dargestellten Karte 5 und dem Kartenleser 1 herstellt.
Der Rahmen 4 oberhalb der Kontakte 8, sowie an der rechten Außenseite des Kontaktträgers 2, entlang der Feder 13, welche in diesem Ausführungsbeispiel durch eine Spiralfeder 13 realisiert ist, stellt einen geschlossenen Rahmen 4 dar. Der oberhalb der Kontakte 8 liegende Teil dieses Rahmens 4 nimmt zusätzlich teilweise einen Kontaktanwesenheitsschalter 9 auf.

Die Funktionsweise des Push-Push Mechanismus 10 verläuft im Allgemeinen so, dass eine Karte 5 in den Kartenleser 1 mit einem ersten Push eingeführt wird, um in einer Leseposition zu verharren. Anschließend wird die Karte 5 mittels eines zweiten Pushes, unter Unterstützung der Spiralfeder 13 wieder aus dem Kartenleser 1 herausbefördert. In dem erfindungsgemäßen Kartenleser 1, wird das Herausbefördern eingeschränkt durch einen Rückhaltemechanismus, der später näher erläutert wird.

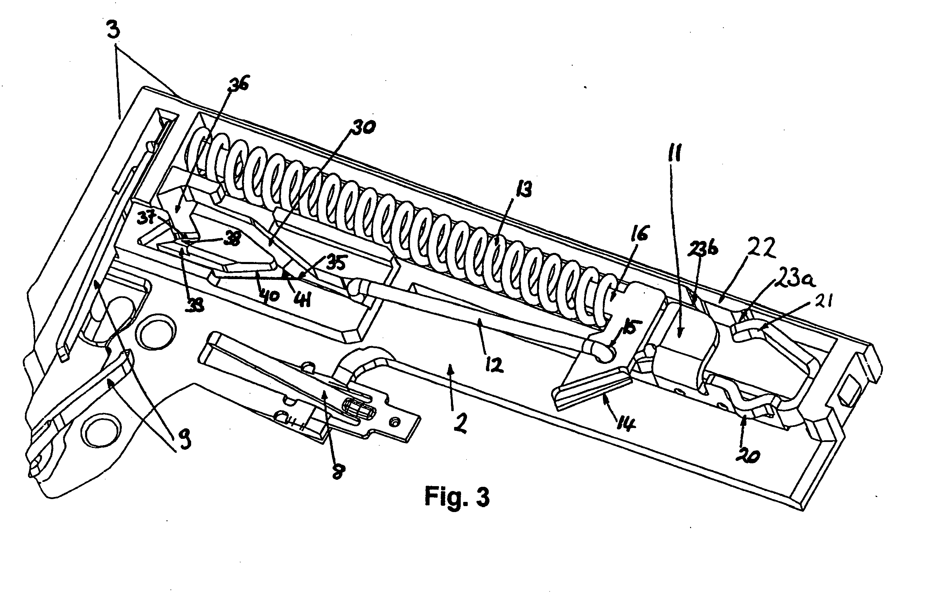

Wie schon eingangs erwähnt besteht ein Problem gängiger Kartenleser in der zu großen Bauhöhe. Um diese zu verringern wird gemäß der vorliegenden Erfindung, der eine Laufbahn 31 bildende Steuerkurvenkanal 30, in der Art ausgeführt, dass die Anzahl der Höhenunterschiede (Δh) der Laufbahn (31) des Steuerkurvenkanals 30 und entsprechende unterschiedliche Steuerkurvenkanalabschnitte, im weiteren Verlauf der Beschreibung kurz SKA genannt, auf vorzugsweise zwei reduziert wird. In Figur 3 sieht man einen perspektivisch vergrößerten Ausschnitt von Figur 2, bei der der Push-Push Mechanismus 10 in einer Ausgangsstellung SKA 34, d.h. ohne eingeführte Karte gezeigt ist. Man erkennt zwei Stufen (37, 39), die eine Rastposition SKA 38 flankieren. Die unterschiedlichen Steuerkurvenkanalabschnitte, SKA 35, SKA 38 und SKA 40 weisen alle den gleichen Höhenunterschied h1, relativ zum Höhenniveau des Kontaktträgerbodens h0, auf. Der SKA 36, die Höhe des eine Rampe bildenden SKA 39 und SKA 40, weisen einen zweiten, bezüglich der Rastposition SKA 38, größeren Höhenunterschied h2 ebenfalls gemessen vom Kontaktträgerboden h0 auf. Womit gilt:
h2>h1>h0

Ebenfalls in Figur 3 ist ein Stoppelement 22 zu erkennen, welches später genauer erläutert wird.

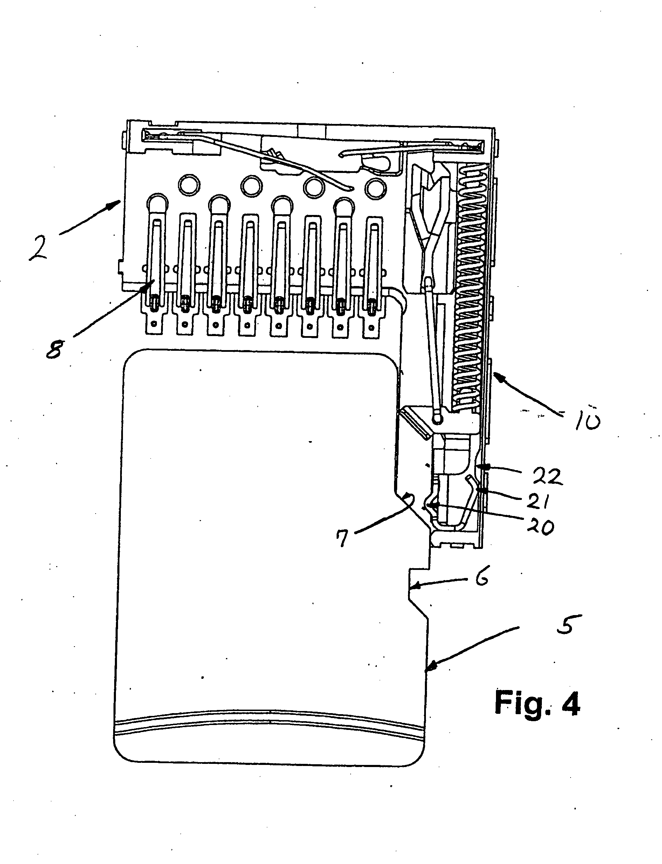

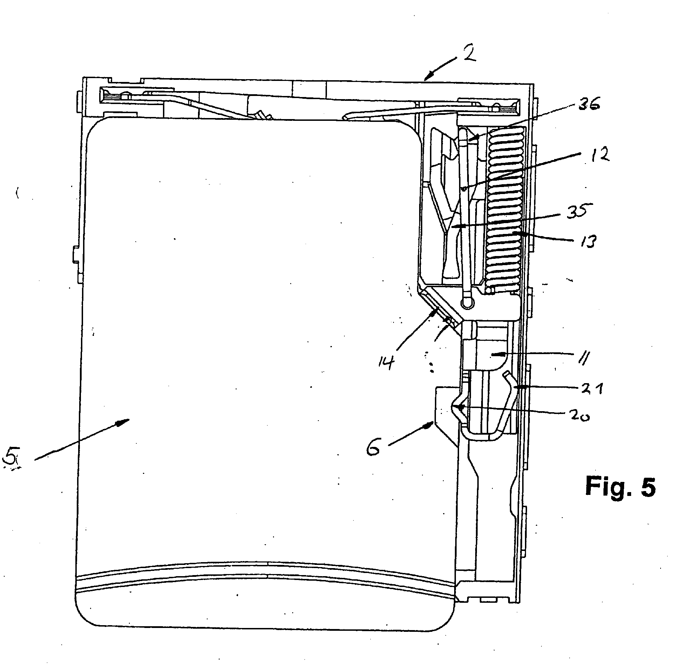

Figur 4 zeigt den Beginn eines Karteneinschubs. Eine Kartenanlagefläche 7 überstreicht eine am Kartenschieber 11 ausgebildete Einrastnase 20. Da eine ebenfalls am Kartenschieber 11 ausgebildete Bremsnase 21 in Verbindung mit dem Stoppelement 22, den Kartenschieber 11 in der Ausgangstellung 34 hält, bis die Einrastnase 20 in der Kartenaussparung 6 eingerastet ist und die Karte 5 mit ihrer Kartenanlagefläche 7 an der Kartenschieberanlagefläche 14 anliegt, was in Figur 5 dargestellt ist.

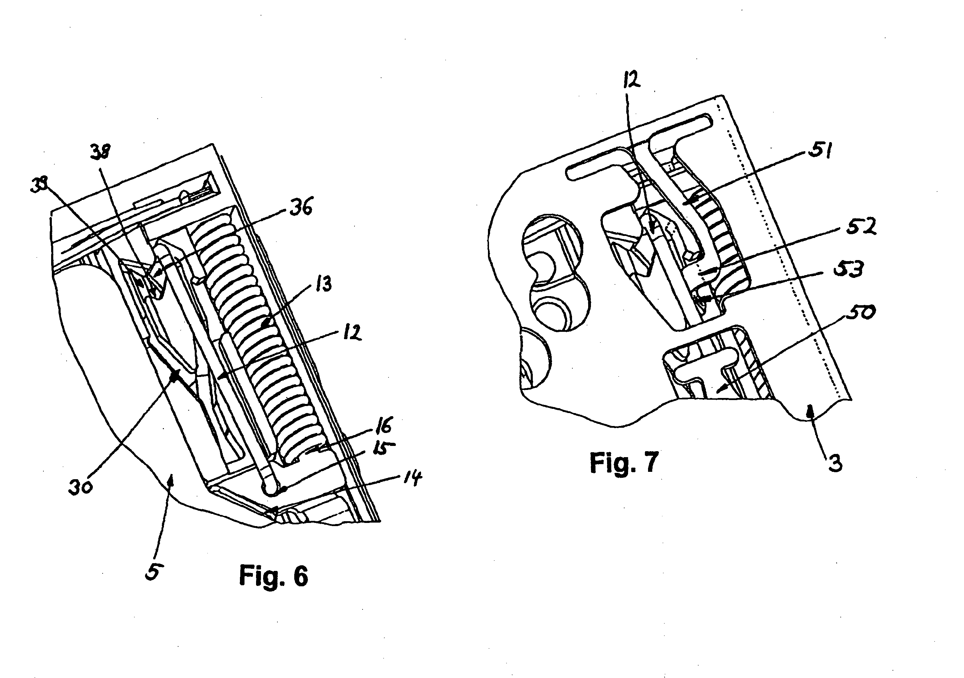

Beim anschließenden weiteren Einführen der Karte 5 in den Push-Push-Kartenleser 1, vergleiche Figur 5, wird das Steuerelement 12 über den Kartenschieber 11 im Steuerkurvenkanal 30 entlang geführt, wobei die Spiralfeder 13 zusammen gepresst wird. Diese Bewegung des Steuerelementes 12 beginnt im SKA 35, verläuft entlang dieses Abschnitts 35 und endet nach dem vollständigen Einführen der Karte 5 in einer Überhubposition SKA 36 (Fig. 5).
Bevor der SKA 36 erreicht ist, erfährt das Steuerelement 12 eine seitliche Kraft durch die Stützfeder 51, welches zum einen das Steuerelement 12 auf die (in Fig. 5) linke Seite des SKA 36 zwingt und somit im weiteren Verlauf ein Einrasten im SKA 38 erlaubt und zum anderen ein Zurückkehren in den SKA 35 verhindert.
Bei konventionellen Kartenlesern ist dieser Vorgang mittels einer weiteren Stufe realisiert, auf die jedoch wie erwähnt, bei der vorliegenden Erfindung durch die Verwendung die Stützfeder 51 verzichtet werden kann, was zu einer Reduktion der Bauhöhe führt.
Eine Wechselwirkung zwischen dem Steuerelement 12 und der Stützfeder 51 ist noch mal detailliert in Figur 7 gezeigt. Der aus dieser Wechselwirkung resultierende Kraftschluss zwischen Stützfeder 51 und dem Steuerelement 12 findet über das Führungselement 52 und die Federelementanlagefläche 53 statt.
Figur 6 ist eine Detaildarstellung des Steuerkurvenkanals 30 ohne Metalldeckel 3, wobei wie in Figur 7 die Überhubposition dargestellt ist, die der anschließenden Bewegung in die Rastposition SKA 38 vorausgeht.
Der ebenfalls gezeigte Federlappen 50 drückt auf das Steuerelement 12, um eine saubere Führung im Steuerkurvenkanal 30 und auf der Laufbahn 31 zu gewährleisten. Beim späteren Auswerfen der Karte wird über diesen Federlappen 50 zusätzlich eine Kraft auf das Steuerelement ausgeübt, was zu einem Abbremsen zusätzlich zu dem des Stoppelementes 22 führt und ein Herausschleudern der Karte verhindert.

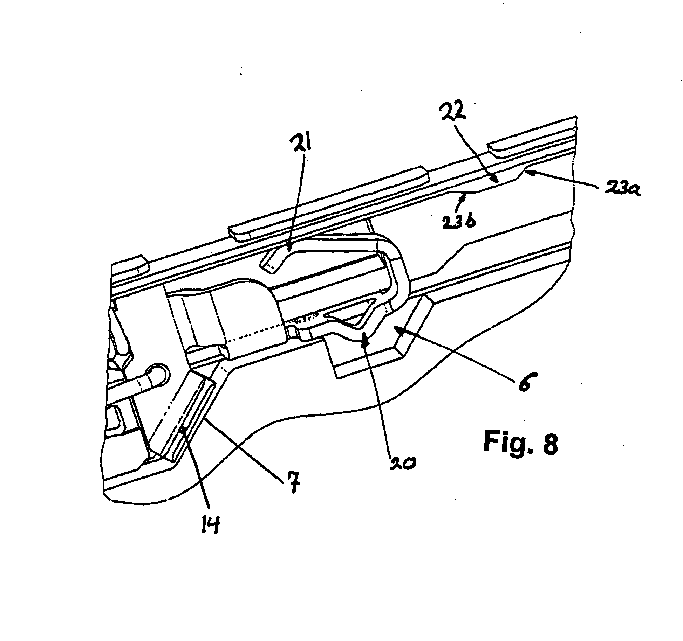

Hierzu zeigt Figur 8 ein Detail des Kartenschiebers 11 mit eingesetzter Karte. In dieser Darstellung ist nochmals gut zu erkennen, wie der Kartenschieber 11 mit der Einrastnase 20 in der Kartenaussparung 6 eingerastet ist.

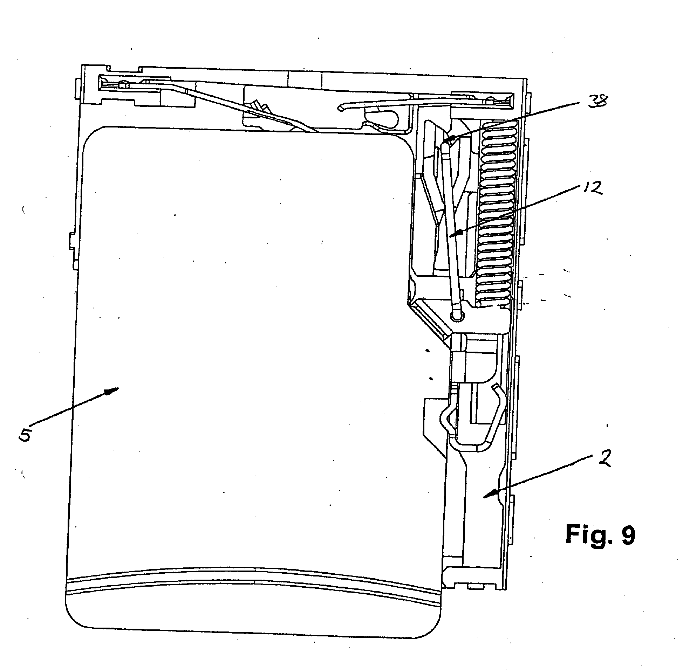

Der erste Push auf die Karte 5, befördert diese wie beschrieben in die Überhubposition SKA 36, um diese nach dem Loslassen der Karte und nach Überwinden einer ersten Stufe SKA 37 in die Rastposition SKA 38 zu gelangen. Diese Position ist in Figur 9 dargestellt.
Die Rastposition SKA 38, auch Leseposition genannt, wird dann nach einem zweiten Push wieder verlassen, wobei das Steuerelement 12 die zweite Stufe SKA 39, welche vorzugsweise als Rampe 39 ausgeführt ist, überwindet und über SKA 40, wieder in die Ausgangsstellung SKA 34 zurückkehrt.

Sobald die Karte, mit dem zweiten Push aus der Rastposition SKA 38 befördert wird, wirken Reibungskräfte zwischen den Federlappen 50 und der Karte 5 und bremst diese ab. Gegen Ende des Herausbeförderns der Karte 5, wenn der Kartenschieber 11 mit seinem U-förmigen Ende und hier speziell mit der Bremsnase das Stoppelement 22 erreicht, wird der Kartenschieber 11 am Stoppelement 22 zusätzlich abgebremst. Die Karte 5 verbleibt jedoch im Push-Push Kartenleser 1, da die Einrastnase 20 nach wie vor in der Kartenaussparung 6 eingerastet ist. Dieses Einrasten verhindert nicht nur ein Herausschleudern der Karte, sondern ermöglicht auch einen Einbau des Push-Push Kartenlesers 1 in einer Überkopfposition, also einer Position z.B. an der Unterseite eines Camcorders, ohne dass die Karte 5 nach dem zweiten Push aus dem Gerät fällt.

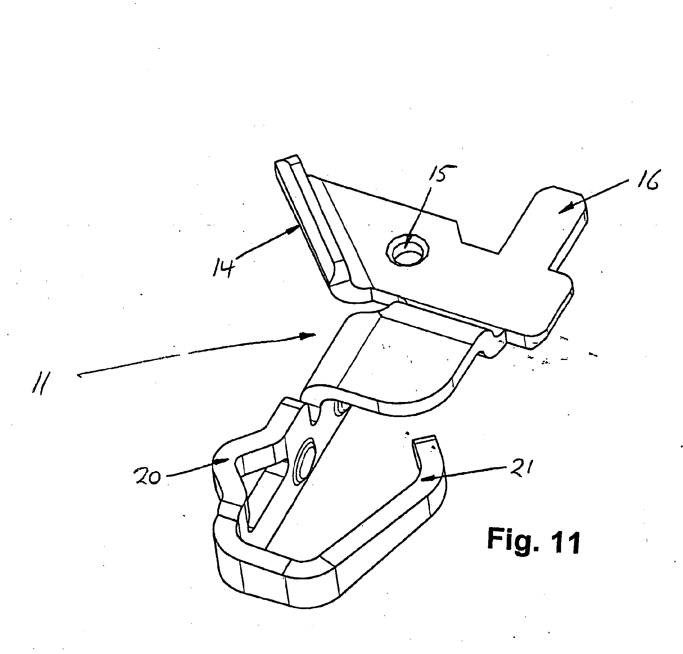

Figur 11 zeigt in vergrößerter Darstellung den Kartenschieber 11, mit der Einrastnase 20, der Bremsnase 21 und der Kartenschieber-Anlagefläche 14. Die Aufnahme für das Steuerelement 15 und die Aufnahme für die Spiralfeder 16 dienen der Fixierung des Steuerelements 12 und der Spiralfeder 13. Das ebenfalls in Figur 3 dargestellte Stoppelement 22, weist an seiner einen Seite einen Radius 23a auf, der gegenüber Radius 23b kleiner ist. Dies führt beim Einführen der Karte dazu, dass der Kartenschieber 11 mit seiner Bremsnase 21 so lange am Stoppelement 22 verbleibt, bis die Karte 5 an der Kartenschieber-Anlagefläche 14 anliegt und den Kartenschieber 11 in der erwünschten Weise voran schiebt. Ohne das Stoppelement 22 könnte der Kartenschieber 11 aufgrund von Reibung zwischen dem Kartenschieber 11 und der Karte 5 schon bewegt werden, bevor die Karte an der Kartenschieber-Anlagefläche 14 anliegt, was zu einem Verkanten der Karte und zur Beschädigung des Kartenlesers führen könnte. Der Radius 23b des Stoppelementes 22 verzögert in Verbindung mit der Bremsnase 21 am U-förmigen Teil des Kartenschiebers 11 das Auswerfen der Karte 5 beim zurückschnellen des Kartenschiebers.

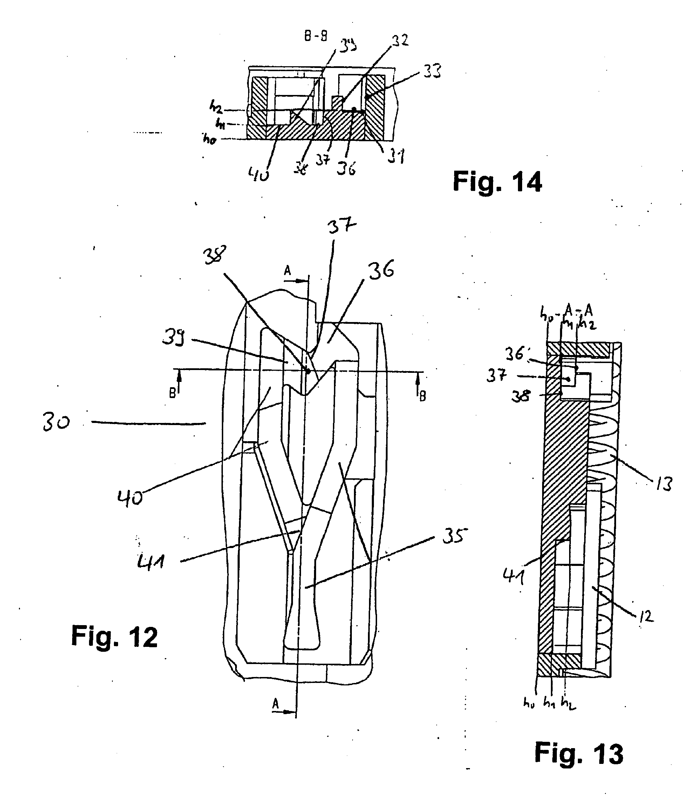

Figur 12 zeigt nochmals den Steuerkurvenkanal 30 mit den verschiedenen Steuerkurvenkanalabschnitten, wie in den vorherigen Ausführungen erläutert. Figur 13 stellt einen Schnitt, wie in Figur 12 angedeutet entlang der Linie A-A dar. Vergleicht man den oberen Teil der Zeichnung, in der sowohl die Rastposition SKA 38, als auch das Plateau SKA 36 zu erkennen sind mit dem unteren Teil der Zeichnung, so ist zu erkennen, dass SKA 35 und SKA 38 auf einem Höhenniveau h1 liegen und SKA 37 und SKA 41 auf einem zweiten Höhenniveau h2. Das Steuerelement befindet sich in dieser Zeichnung zwischen der Startposition und der Überhubposition, also noch vor SKA 36. In Figur 14 sieht man einen Schnitt, eingezeichnet als Linie B-B in Figur 12. Gut zu erkennen ist, dass sich bezüglich des Kontaktträgerbodens mit der Höhe h0, SKA 40 und die Rastposition SKA 38 auf derselben Höhe h1 befinden und die Stufen SKA 37 und SKA 39 die gleiche Höhe h2 besitzen wie das Plateau SKA 36.

### Bezugszeichenliste

- 1: Push-Push Kartenleser
- 2: Kontaktträger
- 3: Deckel
- 4: Rahmen
- 5: Karte
- 6: Kartenaussparung
- 7: Karten-Anlagefläche
- 8: Kontakte
- 9: Kartenanwesenheitsschalter

- 10: Push-Push Mechanismus
- 11: Kartenschieber
- 12: Steuerelement
- 13: Spiralfeder
- 14: Kartenschieber-Anlagefläche
- 15: Aufnahme für Steuerelement
- 16: Aufnahme für Spiralfeder

- 20: Einrastnase
- 21: Bremsnase
- 22: Stoppelement
- 23a: Radius am Stoppelement
- 23b: Radius am Stoppelement

- 30: Steuerkurvenkanal
- 31: Laufbahn
- 32: innere Führungsbahn
- 33: äußere Führungsbahn
- 34: SKA Ausgangsstellung
- 35: SKA-Einschub
- 36: SKA- Plateau

- 37: S KA- Stufe
- 38: SKA-Rastposition
- 39: SKA-Rampe
- 40: SKA-Auswurf
- 41: SKA-Stufe

- 50: Federlappen
- 51: Federelement
- 52: Führungselement
- 53: Federelement-Anlagefläche

- 60: Karteneinführöffnung

## Patentansprüche

1. Push-Push Kartenleser (1) mit
einem Kontaktträger (2) und einem durch die einzusteckende und zu lesende Karte (5) betätigbaren
Push-Push Mechanismus (10), der folgendes aufweist:
einen am Kontaktträger (2) hin- und herbeweglich angeordneten Kartenschieber (11),
einen im Kontaktträger (2) befindlichen Steuerkurvenkanal (30) und
ein mit letzterem in Eingriff stehendes Steuerelement (12), welches mit einem Ende, dem Eingriffsende in den Steuerkurvenkanal (30) eingreift, und mit einem anderen Ende, dem Anbringungsende, am Kartenschleber (11) angebracht ist,
wobei der Steuerkurvenkanal (30) eine von inneren und äußeren Führungsbahnen (32, 33) begrenzte Laufbahn (31) aufweist, und eine einer Leseposidon der Karte (5) entsprechende Rastposition (38) für das Steuerelement (12) definiert, und
wobei die Laufbahn (31) des Steuerkurvenkanals (30) im Bereich der Rastposition (38) des Steuerkurvenkanals (30) mehrere, vorzugsweise nur zwei Höhenunterschtede bildet, und
wobei der Push-Push Mechanismus (10) ferner Federmittel (51) aufweist, welche auf das Steuerelement (12) eine quer zur Kerteneinsteckrichtunp einwirkende Kraft ausübt.

2. Kartenleser (1) nach Anspruch 1, wobei der Steuerkurvenkanal (30) folgende Steuerkurvenkanalabschnitte aufweist:
eine Ausgangsstellung (34), einen Einschub (35), ein Plateau (38), eine Stufe (37), eine Rampe (39), einen Auswurf (40) und eine weitere Stufe (41).

3. Kartenleser (1) nach Anspruch 2, wobei der Steuerkurvenkanal (30) im Bereich der Rastposition (38) das Plateau (36), die Stufe (37) und die Rampe (39) verfügt.

4. Kartenleser (1) nach Anspruch 1, wobei das Steuerelement (12) ein Steuerdraht (12) ist, wobei der Kontaktträger (2) über einen Rahmen (4) verfügt, und wobei der Kontaktträger (2) einen Kartenanwesenheitsschalter (6) besitzt, der von der Karte (5) in der Leseposition betätigt wird

5. Kartenleser (1) nach Aspruch 2 und 4, wobei der Steuerdraht (12) den Steuerkurvenkanal (30) durch einen ersten Push, entlang des Einschubs (35) und einer Überhubposition auf dem Plateau (36) in eine Rastposition (38), durchläuft.

6. Kartenleser (1) nach Anspruch 5, wobei der Steuerdraht (12) den Steuerkurvenkanal (30) durch einen zweiten Push, entlang des Auswurfs (40) aus der Rastposition (38) In die Ausgangsstellung (34), durchläuft.

7. Kartenleser (1) nach Anspruch 6, wobei die Rastposition (38) eine geringere Höhe als das Plateau (36) und das obere Ende der Rampe (39) besitzt.

8. Kartenleser (1) nach Anspruch 1, wobei die Federmittel (51) als stützfeder (51) ausgebildet ist.

9. Kartenleser (1) nach einem der Ansprüche 1-8, wobei ein am Kontaktträger angebrachter Deckel vorgesehen ist, der vorzugsweise ein Metalldeckel (3) ist, und wobei die Stützfeder (51) vorzugsweise durch Ausstanzen aus dem Metalldeckel (3) ausgeführt ist.

10. Kartenleser (1) nach Anspruch 9, wobei der Metalldeckel (3) ferner mindestens einen Federlappen (50) enthält, der eine die Karte (5) führende und Karten (5) bremsende Wirkung erzeugt, sowie eine bremsende Wirkung am Steuerelement (12) bewirkt.

11. Kartenleser (1) nach einem der vorhergehenden Ansprüche, wobei, der bewegliche Kartenschieber (11) mit einem Federabschnitt ausgestattet ist, der ein Abbremsen des Kartenschiebers (11) an einem Stoppelement (22) bewirkt, wenn eine Karte (5) über einen zweiten Push aus einer Rastposition (38) In eine Entnahme oder Ausgangsstellung (34) gebracht wird und der weiterhin ein Auswerfen und Blockieren der Karte (5) bewirkt, wobei das Blockieren der Karte (5) ein Herausfallen derselben aus dem Kartenleser (1) verhindert, wenn sich diese In der Ausgangsstellung (34) befindet.

12. Kartenleser, (1) nach Anspruch 11, wobei das Stoppelement (22) über zwei verschiedene Radien (23a, 23b) verfügt, wobei vorzugsweise das Stoppelement (22) aus dem Kontaktträger (2) ausgebildet ist, bzw. von diesem gebildet wird.

13. Kartenleser (1) nach Anspruch 11, wobei der Federabschnitt am Kartenschieber (11) eine Einrastnase (20) besitzt, die beim Einführen der Karte (5) ein verfrühtes Bewegen des Kartenschiebers (11) durch Blockieren am Radius (23a) des Stoppelements (22) verhindert und beim Ausführen der Karte (5) nach dem zweiten Push, ein Abbremsen des Kartenschiebers (11) am Radius (23b) verursacht.

14. Kartenleser (1) nach Anspruch 13, wobei der Federabschnitt am Kartenschieber (11) eine Bremsnase (21) besitzt, die durch Einrasten In die Aussparung an der Karte (5), ein Blockieren der Karte (5) bewirkt und somit ein Herausfallen der Karte (5) an der Entnahmeposition verhindert, und wobei der Kartenschieber (11) vorzugsweise eine Kartenschieber-Anlagefläche (14) besitzt, die ein um 180° zur Kartenschieber Bewegungsrichtung verdrehtes Einführen der Karte (5), bis in die Leseposition, verhindert.

15. Kartenleser (1) nach einem der vorhergehenden Ausprüche
wobei die Laufbahn (31) des Steuerkurvenkanals (30) zwei Stufen aufweist, die gleiche Höhe aufweisen.

## Claims

1. A push-push card reader (1) comprising:
a contact support (2) and a push-push mechanism (10) actuable by means of an inserted card (5), which is to be read,
said push-push mechanism (10) comprising:
a card slide (11) reciprocally movably mounted at the contact support (2),
a control curve channel (30) located in the contact support (2) and
a control element (12) in engagement with the control channel, said control element (12) being in engagement with the control curve channel (30) with one end, the engagement end, and being mounted with the other end, the mounting end, at the card slide (11),
wherein the control curve channel (30) comprises a guide path (31) bordered by inner and outer guide paths (32, 33), said control curve channel (30) further comprising a reading position of the card (5), which corresponds to a respective rest or detent position (38) for the control element (12), and
wherein the guide path (31) of the control curve channel (30) comprises in the area of the rest position (38) of the control curve channel (30) a plurality, preferably only two different height levels, and
wherein the push-push mechanism (10) further comprises spring means (51) which apply onto the control element (12) a force acting transversally with respect to the card insert direction.

2. Card reader (1) as set forth in claim 1 wherein the control curve channel (30) comprises the following control curve channel sections:
a start position section (34), an insert section (35), a plateau section (38), a step section (37), a ramp section (39), an ejection section (40) and a further step section (41).

3. Card reader (1) as set forth in claim 2, wherein the control curve channel (30) comprises in the area of the rest position (38) the plateau (36), the step (37) and the ramp (39).

4. Card reader (1) as set forth in claim 1 wherein the control element (12) is a control wire (12), and the contact support (2) comprises a frame (4) and wherein the contact support (2) comprises a card presence switch (6), which is actuated by the card in its reading position.

5. Card reader (1) as set forth in claims 2 and 4 wherein the control wire (12) moves through the control curve channel (30) due to a first push along the insert (35) and a over-lift position on the plateau (36) into a rest or detent position (38).

6. Card reader (1) as set forth in claim 5 wherein the control wire (12) moves due to a second push through the control curve channel (30) along an ejection section (40) from the rest position (38) into the start position (34).

7. Card reader (1) as set forth in claim 6 wherein the rest position (38) comprises a smaller height than the plateau (36) and the upper end of the ramp (39).

8. Card reader (1) as set forth in claim 1 wherein the spring means (51) are designed as a support spring (51).

9. Card reader (1) as set forth in one of claims 1 to 8 wherein a cover, preferably a metal cover (3) is mounted to the contact support, wherein the support spring (51) is preferably created by being stamped out of the metal cover (3).

10. Card reader (1) as set forth in claim 9 wherein the metal cover further comprises at least one spring tab (50), which creates a force guiding and braking the card and also causing a braking effect at the control element (12).

11. Card reader (1) as set forth in one of the preceding claims wherein the movable card slide (11) comprises a spring section (12), which causes a braking effect for the card slide (11) at a stop element (22) in case a card (5) is transported by means of a second push from a rest position (38) into the removal position or start position (34),
and which further effects an ejection and blocking of the card (5), said blocking of the card (5) avoids a drop out of the card of the card reader (1) at the time the card is in the start position (34).

12. Card reader (1) as set forth in claim 11, wherein the stop element (22) comprises two different radii (23a, 23b), and wherein the stop element (22) is preferably formed at the contact support or is formed by said contact support (2).

13. Card reader (1) of claim 11, wherein the spring section at the card slide (11) comprises a detent nose (20), which avoids, at the time the card (5) is inserted a premature movement of the card slide (11), by blocking at the radius (23a) of the stop element (22) and causes at the time the second push of the card is made, a braking of the card side (11) at said radius (23b).

14. Card reader (1) of claim 13, wherein the spring section at the card slide (11) comprises a braking nose (21) which causes due to engagement into the recess at the card (5) a blocking of the card (5) and, thus, avoids that the card (5) falls out of the card reader in the card removal position and wherein the card reader (11) preferably comprises a card slide-abutment surface (14), which makes it impossible that the card (5) is inserted up to the reading position in a direction turned 180° with respect to the direction of movement of the card slide.

15. Card reader (1) as set forth in one of the proceeding claims wherein the guide path (31) of the control curve channel (30) comprises two steps having the same height.

## Revendications

1. Lecteur de carte à double poussée (1) comprenant :
un support de contacts (2) et un mécanisme de double poussée (10) actionnable au moyen d'une carte insérée (5) qui doit être lue,
le mécanisme de double poussée (10) comprenant :
un coulisseau de carte (11) mobile en va-et-vient et monté au niveau du support de carte (2),
un canal de courbe de contrôle (30) situé dans le support de contacts (2), et
un élément de contrôle (12) en prise avec le canal de contrôle, l'élément de contrôle (12) étant en prise avec le canal de courbe de contrôle (30) à une première extrémité, l'extrémité d'engagement, et étant monté à l'autre extrémité, l'extrémité de montage, sur le coulisseau de carte (11),
dans lequel le canal de courbe de contrôle (30) comprend un chemin de guidage (31) bordé par des chemins de guidage intérieur et extérieur (32, 33), le canal de courbe de contrôle (30) comprenant en outre une position de lecture de la carte (5), qui correspond à une position respective de repos ou de détente (38) pour l'élément de contrôle (12), et
dans lequel le chemin de guidage (31) du canal de courbe de contrôle (30) comprend dans la région de la position de repos (38) du canal de courbe de contrôle (30) une pluralité de niveaux, de préférence seulement deux, de hauteurs différentes, et
dans lequel le mécanisme de double poussée (10) comprend en outre des moyens de ressort (51) qui appliquent sur l'élément de contrôle (12) une force agissant transversalement par rapport à la direction d'insertion de la carte.

2. Lecteur de carte (1) selon la revendication 1, dans lequel le canal de courbe de contrôle (30) comprend les sections suivantes de canal de courbe de contrôle :
une section de position de départ (34), une section d'insertion (35), une section de plateau (38), une section de marche (37), une section de rampe (39), une section d'éjection (40) et une autre section de marche (41).

3. Lecteur de carte (1) selon la revendication 2, dans lequel le canal de courbe de contrôle (30) comprend dans la région de la position de repos (38) le plateau (36), la marche (37) et la rampe (39).

4. Lecteur de carte (1) selon la revendication 1, dans lequel l'élément de contrôle (12) est un fil de contrôle (12), et le support de contacts (2) comprend un cadre (4), et dans lequel le support de contacts (2) comprend un commutateur de présence de carte (6), qui est actionné par la carte dans sa position de lecture.

5. Lecteur de carte (1) selon les revendications 2 et 4, dans lequel le fil de contrôle (12) se déplace sur le canal de courbe de contrôle (30) en raison d'une première poussée le long de la section d'insertion (35) et d'une position surélevée sur le plateau (36) vers une position de repos ou de détente (38).

6. Lecteur de carte (1) selon la revendication 5, dans lequel le fil de contrôle (12) se déplace en raison d'une deuxième poussée sur le canal de courbe de contrôle (30) le long d'une section d'éjection (40) à partir de la position de repos (38) vers la position de départ (34).

7. Lecteur de carte (1) selon la revendication 6, dans lequel la position de repos (38) a une plus faible hauteur que le plateau (36) et l'extrémité supérieure de la rampe (39).

8. Lecteur de carte (1) selon la revendication 1, dans lequel les moyens de ressort (51) sont conçus comme un ressort de support (51).

9. Lecteur de carte (1) selon l'une quelconque des revendications 1 à 8, dans lequel un couvercle, de préférence un couvercle métallique (3), est monté sur le support de contacts, le ressort de support (51) étant de préférence crée par poinçonnage du couvercle métallique (3).

10. Lecteur de carte (1) selon la revendication 9, dans lequel le couvercle métallique comprend en outre au moins un onglet à ressort (50), qui créé une force guidant et freinant la carte et qui provoque aussi un effet de freinage au niveau de l'élément de contrôle (12).

11. Lecteur de carte (1) selon l'une quelconque des revendications précédentes, dans lequel le coulisseau de carte mobile (11) comprend une section de ressort (12), qui provoque un effet de freinage pour le coulisseau de carte (11) au niveau d'un élément d'arrêt (22) dans le cas où une carte (5) est transportée au moyen d'une deuxième poussée d'une position de repos (38) vers la position de retrait ou la position de départ (34),
et qui en outre provoque une éjection et un blocage de la carte (5), le blocage de la carte (5) évitant une chute de la carte hors du lecteur de carte (1) au moment où la carte est dans la position de départ (34).

12. Lecteur de carte (1) selon la revendication 11, dans lequel l'élément d'arrêt (22) comporte deux rayons différents (23a, 23b), et dans lequel l'élément d'arrêt (22) est de préférence formé au niveau du support de contacts ou est formé par le support de contacts (2).

13. Lecteur de carte (1) selon la revendication 11, dans lequel la section de ressort au niveau du coulisseau de carte (11) comprend un nez de détente (20) qui évite, au moment où la carte (5) est insérée, un mouvement prématuré du coulisseau de carte (11), par un blocage au niveau du rayon (23a) de l'élément d'arrêt (22), et provoque au moment où la deuxième poussée est faite, un freinage du coulisseau de carte (11) au niveau dudit rayon (23b).

14. Lecteur de carte (1) selon la revendication 13, dans lequel la section de ressort au niveau du coulisseau de carte (11) comprend un nez de freinage (21) qui provoque, en raison d'un engagement dans le renfoncement au niveau de la carte (5), un blocage de la carte (5) et évite ainsi que la carte (5) ne tombe hors du lecteur de carte dans la position de retrait de carte, et dans lequel le lecteur de carte (11) comprend de préférence une surface de butée de coulisseau de carte (14), qui rend impossible l'insertion de la carte (5) jusqu'à la position de lecture dans une direction tournée de 180° par rapport à la direction du mouvement du coulisseau de carte.

15. Lecteur de carte (1) selon l'une quelconque des revendications précédentes, dans lequel le chemin de guidage (31) du canal de courbe de contrôle (30) comprend deux marches ayant la même hauteur.
